# EUROPEAN PATENT APPLICATION

(11) **EP 4 369 550 A1**
(43) Date of publication of application: **15.05.2024**
(21) Application number: 21953121.7
(22) Date of filing: 11.08.2021
(51) Int. Cl.: H02J 7/00, H02J 7/02, H02J 7/04, H01M 10/44, H01M 10/46

(54) **CHARGING METHOD, CHARGING APPARATUS AND COMPUTER-READABLE STORAGE MEDIUM**

(71) Applicant: Huawei Digital Power Technologies Co., Ltd., Shenzhen, Guangdong 518043 (CN)
(72) Inventor: HOU, Tianhong, Shenzhen, Guangdong 518129 (CN); LIU, Zongzhe, Shenzhen, Guangdong 518129 (CN); ZHONG, Zheng, Shenzhen, Guangdong 518129 (CN)
(74) Representative: Maiwald GmbH
(86) International application number: PCT/CN2021/112117
(87) International publication number: WO 2023/015498

(57) **Abstract**

This application discloses a charging method, a charging apparatus, and a computer-readable storage medium. In a process of charging a battery module, a current for charging the battery module is adjusted, to reduce an expansion force of the battery module and prolong a service life of the battery, so that a structure of a battery system in which the battery is located can be stable. The method includes: charging a to-be-charged battery module by using a charging current in a first constant current charging phase, where charging currents in a plurality of constant current charging phases are sequentially arranged, and the charging current in the first constant current charging phase is a charging current in a non-last-order constant current charging phase; determining an expansion force of the battery module; and determining, based on the expansion force, whether to adjust a current for charging the battery module from the charging current in the first constant current charging phase to a charging current in a second constant current charging phase, where the charging current in the second constant current charging phase is a charging current in a next-order constant current charging phase of the charging current in the first constant current charging phase.

## Description

### TECHNICAL FIELD

This application relates to power supply charging technologies, and in particular, to a charging method, a charging apparatus, and a computer-readable storage medium.

### BACKGROUND

A lithium-ion battery may be a lithium battery for short. The lithium battery has advantages such as a small size, a lightweight, and a long cycle life, and is currently widely used in fields such as communication base stations, data centers, energy storage power stations, and electric vehicles. With the wide application of the lithium battery, there is an increasingly strong demand for a lithium battery with a longer service life.

Usually, the lithium battery includes an electrochemical cell of the lithium battery and an external structure used to accommodate the electrochemical cell of the lithium battery, and the electrochemical cell of the lithium battery is constrained by the external structure and the like. Expansion occurs in a process of charging the lithium battery, and a force generated by extrusion between the electrochemical cell of the lithium battery and the external structure may be referred to as an expansion force. Usually, an expansion force of the lithium battery is excessively large, which has negative impact on a service life and a system structure of the lithium battery.

### SUMMARY

This application provides a charging method, a charging apparatus, and a computer-readable storage medium. In a process of charging a battery, a current for charging the battery is adjusted, to reduce an expansion force of the battery and prolong a service life of the battery, so that a structure of a system in which the battery is located can be stable.

According to a first aspect, this application provides a charging method, and the charging method may be performed by a charging apparatus. The charging apparatus may charge a to-be-charged battery module in a plurality of constant current charging phases, and the charging apparatus may charge the charging module by using charging currents in the plurality of constant current charging phases. The charging currents in the plurality of constant current charging phases are sequentially arranged. The charging apparatus may charge the to-be-charged battery module by using a charging current in a first constant current charging phase, where the charging current in the first constant current charging phase may be one of the charging currents in the plurality of constant current charging phases, and the charging current in the first constant current charging phase is a charging current in a non-last-order constant current charging phase. In a process of charging the battery module, the battery module may expand. A force generated by extrusion between the battery module and a housing of the battery module due to expansion of the battery module may be recorded as an expansion force of the battery module. The charging apparatus may determine the expansion force of the battery module and determines, based on the expansion force, whether to adjust a current for charging the battery module from the charging current in the first constant current charging phase to a charging current in a second constant current charging phase, where the charging current in the second constant current charging phase is a charging current in a next-order constant current charging phase of the charging current in the first constant current charging phase.

In this embodiment of this application, the charging apparatus may determine, based on the expansion force of the battery module, whether to switch the current for charging the battery module. If the current is adjusted, the current for charging the battery module may be adjusted from the charging current in the first constant current charging phase to the charging current in the next-order constant current charging phase. If the current is not adjusted, the battery module is kept being charged by using the charging current in the first constant current charging phase. In the process of charging the battery module, the charging apparatus flexibly adjusts the charging current for charging the battery module, so as to effectively control a change of the expansion force of the battery module, and also stabilize a structure of a battery system in which the battery module is located. A service life of the battery module can be prolonged by reducing the expansion force of the battery module.

In a possible design, when determining the expansion force of the battery module, the charging apparatus may search a correspondence between a temperature and the expansion force for an expansion force corresponding to a first temperature, where the first temperature is an internal temperature of the battery module in the process of charging the battery module by using the charging current in the first constant current charging phase. Alternatively, when determining the expansion force of the battery module, the charging apparatus may collect the expansion force of the battery module.

This embodiment of this application may be applied to a scenario in which the expansion force is collected, and the expansion force of the battery module is directly collected or obtained. It may also be applied to a scenario in which no expansion force is collected, and an expansion force corresponding to an internal temperature of the battery module in each constant current charging phase may be searched from the correspondence between the temperature and the expansion force.

In a possible design, when determining, based on the expansion force, whether to adjust the current for charging the battery module from the charging current in the first constant current charging phase to the charging current in the second constant current charging phase, the charging apparatus may perform the following process: if the expansion force meets a preset condition corresponding to the first constant current charging phase, adjusting the current for charging the battery module from the charging current in the first constant current charging phase to the charging current in the second constant current charging phase; or if the expansion force does not meet a preset condition, keeping charging the battery module by using the charging current in the first constant current charging phase.

In this embodiment of this application, in the process of charging the battery module by using the charging current in the first constant current charging phase, the charging apparatus may determine, based on whether the expansion force of the battery module meets the preset condition corresponding to the first constant current charging phase, whether to adjust the current for charging the battery module. If the expansion force does not meet the preset condition corresponding to the first constant current charging phase, the battery module is kept being charged by using the charging current in the first constant current charging phase. If the expansion force meets the preset condition corresponding to the first constant current charging phase, the current for charging the battery module is adjusted to the charging current in the next-order constant current charging phase of the first constant current charging phase. It can be learned that, in the process of charging the battery module, the charging apparatus uses the expansion force of the battery module as a control point for adjusting the charging current, so as to control the change of the expansion force of the battery module.

In a possible design, the preset condition is one of the following conditions: the expansion force is greater than or equal to an expansion force parameter threshold in the first constant current charging phase, where the expansion force parameter threshold is a maximum value to which the expansion force increases in the first constant current charging phase; a first change rate of the expansion force is greater than or equal to a first threshold in the first constant current charging phase, where the first change rate is a ratio of the expansion force to a state of charge of the battery module, and the first threshold is a maximum value to which the first change rate increases in the current constant current charging phase; a first change rate is less than or equal to a second threshold in the first constant current charging phase, where the second threshold is a minimum value to which the first change rate decreases in the first constant current charging phase; a first change rate is a first preset value, where the first preset value indicates a maximum value or a minimum value that is of the expansion force of the battery module in the first constant current charging phase and that is reached by the expansion force; a second change rate of the expansion force is a second preset value, where the second change rate is a ratio of a first change rate to a state of charge of the battery module, and the second preset value indicates a maximum value or a minimum value that is of the first change rate of the expansion force in the first constant current charging phase and that is reached by the first change rate; or the first constant current charging phase is a non-1^{st}-order constant current charging phase in the charging currents in the plurality of constant current charging phases, the expansion force is equal to a third preset value, the third preset value is determined based on a maximum value of the expansion force of the battery module and a preset proportion, the preset proportion is less than 1, and the maximum value of the expansion force is a maximum value of the expansion force of the battery in the process of charging the battery module and before the charging current in the first constant current charging phase is used to charge the battery module.

In this embodiment of this application, a condition corresponding to each constant current charging phase may be a condition for setting a parameter that can reflect the change of the expansion force. The parameter may be the expansion force, the first change rate of the expansion force, the second change rate of the expansion force, or the like. The condition of each constant current charging phase can be set based on a change characteristic of the expansion force. In the process of charging the battery module, the charging apparatus uses the parameter related to the expansion force of the battery, for example, the expansion force of the battery module, the first change rate of the expansion force, the second change rate of the expansion force, or the like is used as a control point for adjusting the charging current, so as to improve flexibility of controlling the change of the expansion force of the battery module and prolongs a service life of the battery module.

In a possible design, the charging current in the second constant current charging phase is a charging current in a last-order constant current charging phase in the charging currents in the plurality of constant current charging phases. After adjusting the current for charging the battery module from the charging current in the first constant current charging phase to the charging current in the second constant current charging phase, the charging apparatus may keep charging the battery module by using a first voltage between a first moment when a charging voltage of the battery module reaches a voltage threshold and a second moment when the charging current of the battery module is less than a current threshold, where the voltage threshold is a voltage indicating to charge the battery module based on the first voltage, the first voltage is less than or equal to the voltage threshold, and the current threshold is a current indicating that charging ends.

In this embodiment of this application, the charging apparatus charges the battery module by using the charging current in the last-order constant current charging phase. If the voltage of the battery module reaches the voltage threshold, the charging apparatus may charge the battery module by using a voltage in a constant voltage charging phase, and may end charging the battery module until a current at the battery module falls to a preset current threshold.

In a possible design, the charging current in the first constant current charging phase is a charging current in a 2^{nd}-order constant current charging phase in the charging currents in the plurality of constant current charging phases. Before the charging apparatus charges the to-be-charged battery module by using the charging current in the first constant current charging phase, if an internal temperature of the battery module is less than a temperature threshold, the charging apparatus charges the battery module by using a charging current in a 1^{st}-order constant current charging phase in the plurality of constant current charging phases until the internal temperature of the battery module reaches a preset temperature. The preset temperature is greater than or equal to the temperature threshold, and the temperature threshold is a temperature indicating to adjust the current for charging the battery module from the charging current in the 1^{st}-order constant current charging phase to the charging current in the 2^{nd}-order constant current charging phase.

In this embodiment of this application, when an initial temperature of the to-be-charged battery module is less than the temperature threshold, the charging apparatus may charge the battery module by using the charging current in the 1^{st}-order constant current charging phase until the temperature of the battery module is greater than or equal to the preset temperature. In this process, the temperature of the battery module can rise, and performance of the battery module can be improved, thereby improving charging efficiency of the battery module during charging.

In a possible design, before charging the battery module by using the charging current in the first constant current charging phase, the charging apparatus may search a correspondence between the temperature and a charging parameter set for a first charging parameter set corresponding to the internal temperature of the battery module, where the first charging parameter set includes charging currents in a first quantity of constant current charging phases, and a charging current in each of the first quantity of constant current charging phases corresponds to one state of charge interval; and select the charging currents in the plurality of constant current charging phases from the charging currents in the first quantity of constant current charging phases based on the state of charge of the battery module, where the charging currents in the plurality of constant current charging phases include a charging current in a constant current charging phase corresponding to a state of charge interval to which the state of charge belongs and a charging current in a constant current charging phase corresponding to a state of charge interval, where a value in this state of charge interval is greater than that in the state of charge interval of the state of charge, and a quantity of the charging currents in the plurality of constant current charging phases is less than or equal to the first quantity.

In this embodiment of this application, the charging currents in the plurality of constant current charging phases used by the charging apparatus in the process of charging the battery module may be selected from the charging parameter set determined based on the temperature of the battery module. The charging apparatus may select the charging parameter set corresponding to the internal temperature of the battery module. When the initial temperature inside the battery module is different, performance of the battery module is also different. The battery module is charged by using a charging current that is in a constant current charging phase and that is in the charging parameter set corresponding to the initial temperature inside the battery module, thereby improving charging efficiency of charging the battery module. The charging apparatus selects the charging currents in the plurality of constant current charging phases from the charging parameter set based on the state of charge of the battery module, thereby improving charging efficiency of charging the battery module.

In a possible design, in charging currents in two adjacent constant current charging phases in the charging currents in the plurality of constant current charging phases, a value in a state of charge interval corresponding to a charging current in a previous-order constant current charging phase is less than a value in a state of charge interval corresponding to a charging current in a current-order constant current charging phase. In this embodiment of this application, the charging currents in the plurality of constant current charging phases may be sorted based on a state of charge interval corresponding to each constant current charging phase.

According to a second aspect, this application provides a charging apparatus, including a control module and a voltage and current conversion module. The voltage and current conversion module is connected to a to-be-charged battery module, and the control module is connected to the voltage and current conversion module. The voltage and current conversion module is configured to adjust, under control of the control module, a current for charging the battery module. The control module is configured to: control the voltage and current conversion module to charge the to-be-charged battery module by using a charging current in a first constant current charging phase, where the charging current in the first constant current charging phase is one of charging currents in a plurality of constant current charging phases, the charging currents in the plurality of constant current charging phases are used to charge the battery module, the charging currents in the plurality of constant current charging phases are sequentially arranged, and the charging current in the first constant current charging phase is a charging current in a non-last-order constant current charging phase; determine an expansion force of the battery module, where the expansion force is a force generated by extrusion between the battery module and a housing of the battery module due to expansion of the battery module in a process of charging the battery module; and determine, based on the expansion force, whether to control the voltage and current conversion module to adjust a current for charging the battery module from the charging current in the first constant current charging phase to a charging current in a second constant current charging phase, where the charging current in the second constant current charging phase is a charging current in a next-order constant current charging phase of the charging current in the first constant current charging phase.

In a possible design, the charging apparatus further includes a battery module parameter collection module, and the battery module collection module is connected to the battery module, and is configured to collect a temperature of the battery module. When determining the expansion force of the battery module, the control module is specifically configured to search a correspondence between a temperature and the expansion force for an expansion force corresponding to a first temperature, where the first temperature is an internal temperature of the battery module in the process of charging the battery module by using the charging current in the first constant current charging phase.

In a possible design, the charging apparatus further includes a battery module parameter collection module, and the battery module collection module is connected to the battery module, and is configured to collect the expansion force of the battery module. When determining the expansion force of the battery module, the control module is specifically configured to obtain, by the control module, the expansion force that is of the battery module and that is collected by the battery module parameter collection module.

In a possible design, when determining, based on the expansion force, whether to adjust the current for charging the battery module from the charging current in the first constant current charging phase to the charging current in the second constant current charging phase, the control module is specifically configured to: if the expansion force meets a preset condition corresponding to the first constant current charging phase, control the voltage and current conversion module to adjust the current for charging the battery module from the charging current in the first constant current charging phase to the charging current in the second constant current charging phase; or if the expansion force does not meet a preset condition, control the voltage and current conversion module to keep charging the battery module by using the charging current in the first constant current charging phase.

In a possible design, the preset condition is one of the following conditions: the expansion force is greater than or equal to an expansion force parameter threshold in the first constant current charging phase, where the expansion force parameter threshold is a maximum value to which the expansion force increases in the first constant current charging phase; a first change rate of the expansion force is greater than or equal to a first threshold in the first constant current charging phase, where the first change rate is a ratio of the expansion force to a state of charge of the battery module, and the first threshold is a maximum value to which the first change rate increases in the current constant current charging phase; a first change rate is less than or equal to a second threshold in the first constant current charging phase, where the second threshold is a minimum value to which the first change rate decreases in the first constant current charging phase; a first change rate is a first preset value, where the first preset value indicates a maximum value or a minimum value that is of the expansion force of the battery module in the first constant current charging phase and that is reached by the expansion force; a second change rate of the expansion force is a second preset value, where the second change rate is a ratio of a first change rate to a state of charge of the battery module, and the second preset value indicates a maximum value or a minimum value that is of the first change rate of the expansion force in the first constant current charging phase and that is reached by the first change rate; or the first constant current charging phase is a non-1^{st}-order constant current charging phase in the charging currents in the plurality of constant current charging phases, the expansion force is equal to a third preset value, the third preset value is determined based on a maximum value of the expansion force of the battery module and a preset proportion, the preset proportion is less than 1, and the maximum value of the expansion force is a maximum value of the expansion force of the battery in the process of charging the battery module and before the charging current in the first constant current charging phase is used to charge the battery module.

In a possible design, the charging current in the second constant current charging phase is a charging current in a last-order constant current charging phase in the charging currents in the plurality of constant current charging phases. The battery module collection module is further configured to collect a charging voltage of the battery module. The voltage and current conversion module is further configured to adjust, under control of the control module, the current for charging the battery module. The control module is further configured to: after controlling the voltage and current conversion module to adjust the current for charging the battery module from the charging current in the first constant current charging phase to the charging current in the second constant current charging phase, control the voltage and current conversion module to keep charging the battery module by using a first voltage between a first moment when a charging voltage of the battery module reaches a voltage threshold and a second moment when the charging current of the battery module is less than a current threshold, where the voltage threshold is a voltage indicating to charge the battery module based on the first voltage, the first voltage is less than or equal to the voltage threshold, and the current threshold is a current indicating that charging ends.

In a possible design, the charging current in the first constant current charging phase is a charging current in a 2^{nd}-order constant current charging phase in the charging currents in the plurality of constant current charging phases. The control module is further configured to: before controlling the voltage and current conversion module to charge the to-be-charged battery module by using the charging current in the first constant current charging phase, if an internal temperature of the battery module is less than a temperature threshold, control the voltage and current conversion module to charge the battery module by using a charging current in a 1^{st}-order constant current charging phase in the plurality of constant current charging phases until the internal temperature of the battery module reaches a preset temperature, where the preset temperature is greater than or equal to the temperature threshold, and the temperature threshold is a temperature indicating to adjust the current for charging the battery module from the charging current in the 1^{st}-order constant current charging phase to the charging current in the 2^{nd}-order constant current charging phase.

In a possible design, the control module is further configured to: before controlling the voltage and current conversion module to charge the battery module by using the charging current in the first constant current charging phase, search a correspondence between the temperature and a charging parameter set for a first charging parameter set corresponding to the internal temperature of the battery module, where the first charging parameter set includes charging currents in a first quantity of constant current charging phases, and a charging current in each of the first quantity of constant current charging phases corresponds to one state of charge interval; and select the charging currents in the plurality of constant current charging phases from the charging currents in the first quantity of constant current charging phases based on the state of charge of the battery module, where the charging currents in the plurality of constant current charging phases include a charging current in a constant current charging phase corresponding to a state of charge interval to which the state of charge belongs and a charging current in a constant current charging phase corresponding to a state of charge interval, where a value in this state of charge interval is greater than that in the state of charge interval of the state of charge, and a quantity of the charging currents in the plurality of constant current charging phases is less than or equal to the first quantity.

In a possible design, in charging currents in two adjacent constant current charging phases in the charging currents in the plurality of constant current charging phases, a value in a state of charge interval corresponding to a charging current in a previous-order constant current charging phase is less than a value in a state of charge interval corresponding to a charging current in a current-order constant current charging phase.

According to a third aspect, this application provides a computer-readable storage medium. The computer-readable storage medium stores computer instructions, and when the computer instructions in the computer-readable storage medium are executed by a charging apparatus, the charging apparatus is enabled to perform the method according to any design in the first aspect.

According to a fourth aspect, this application provides a computer program product. The computer program product includes computer instructions, and when the computer instructions are executed by a charging apparatus, the charging apparatus is enabled to perform the method according to any design in the first aspect.

For a technical effect that can be achieved by any possible design in any one of the second aspect to the fourth aspect, refer to a technical effect that can be achieved by any possible design in the first aspect. Details are not described herein again.

### BRIEF DESCRIPTION OF DRAWINGS

FIG. 1 is a schematic diagram of a relationship between a charging apparatus and a battery system;
FIG. 2 is a schematic diagram of a structure of a charging apparatus;
FIG. 3 is a schematic diagram of a plurality of constant current charging phases;
FIG. 4 is a schematic diagram of a process in which a charging apparatus charges a battery;
FIG. 5 is a schematic diagram of a process in which a charging apparatus charges a battery;
FIG. 6 is a schematic diagram of a relationship between a number of battery cycles and a capacity retention rate; and
FIG. 7A and FIG. 7B are a schematic flowchart of a charging method.

### DESCRIPTION OF EMBODIMENTS

To make the objectives, technical solutions, and advantages of this application clearer, the following further describes this application in detail with reference to the accompanying drawings. To facilitate understanding of the charging method provided in embodiments of this application, the following first describes an application scenario.

At present, a service life of a lithium battery may be prolonged by modifying a material of the lithium battery or by optimizing a process of charging the lithium battery. A common lithium battery charging mode is a constant current constant voltage (constant current constant voltage, CCCV) charging mode. In the CCCV charging mode, the lithium battery is first charged by using a constant current until a voltage of the lithium battery reaches a target voltage. Then, the lithium battery continues to be charged by using a constant voltage. In a process of continuing to charge the lithium battery by using the constant voltage, a charging current of the lithium battery gradually decreases, and after the charging current decreases to a target current, the process of charging the lithium battery may end.

During charging, discharging, and aging of the lithium battery, the lithium battery may expand. The lithium battery may include at least one battery module, and each battery module may include at least one single electrochemical cell. The single electrochemical cell is bound by an external structure, and a force is generated by extrusion of the external structure in an expansion process of the electrochemical cell. Such force may be referred to as an expansion force of the electrochemical cell. Each battery module is bound by an external structure. As a result, a force is generated by extrusion of the external structure in an expansion process of the battery module. Such force may be referred to as an expansion force of the battery module. A change of the expansion force of the lithium battery affects a service life of the battery and structural stability of a system in which the battery is located.

In view of this, this application provides a charging solution based on an expansion force. In a process of charging a battery, a current for charging the battery is adjusted, to reduce an expansion force of the battery and prolong a service life of the battery, so that a structure of a battery system in which the battery is located is stable.

First, this application provides a charging apparatus 1. The charging apparatus 1 may be applied to a battery system. The battery system may include at least one to-be-charged battery 2. The battery 2 may be a lithium-ion single battery. The battery 2 may also be a lithium-ion battery module, and the battery module may include one or more lithium-ion single batteries. The battery 2 may also be a battery system, and the battery system may include at least one lithium-ion single battery or at least one battery module. In other words, the charging apparatus 1 provided in this application may charge a single battery, charge a battery module, or charge a charging system.

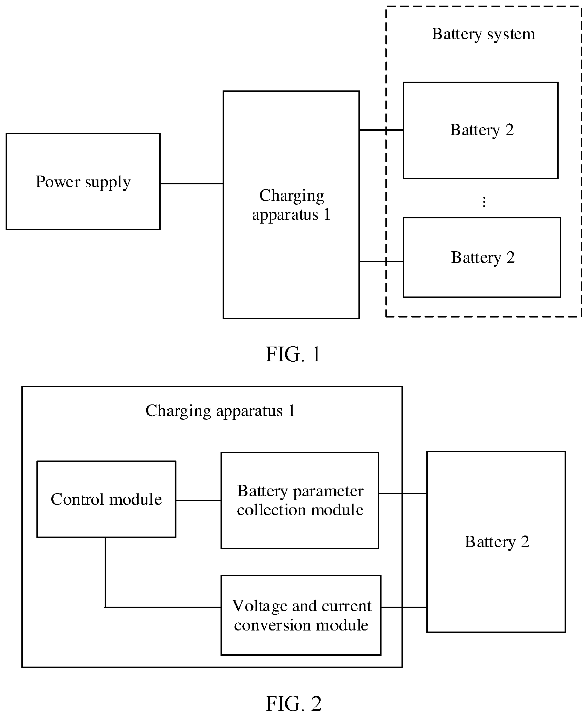

The charging apparatus 1 may be connected to an external power supply, and may provide electric energy for the battery 2. In an embodiment shown in FIG. 1, the charging apparatus 1 may be connected to a power supply (for example, a direct current power supply or an alternating current power supply), and is configured to perform processing such as voltage conversion, frequency conversion, or current conversion on electric energy provided by the power supply, and provide processed electric energy for the battery 2, to charge the battery 2. In this embodiment of this application, the process in which the charging apparatus 1 provides electric energy for the battery 2 is also a process in which the charging apparatus 1 charges the battery 2.

The charging apparatus 1 may charge the battery 2 in a CCCV mode. In this embodiment of this application, the process in which the charging apparatus 1 charges the battery 2 may include a plurality of constant current charging phases. In each constant current charging phase, a current used by the charging apparatus 1 for providing electric energy for the battery 2 is a charging current in the constant current charging phase. The charging apparatus 1 may adjust (or switch) the constant current charging phase, that is, adjust the current for providing electric energy for the battery 2 based on an expansion force of the battery 2, to reduce the expansion force of the battery 2.

After some or all of the plurality of constant current charging phases end, the charging apparatus 1 may keep, based on a charging voltage in a constant voltage charging phase, a voltage for providing electric energy for the battery 2 as the charging voltage in the constant voltage charging phase until charging of the battery 2 ends. For example, in any constant current charging phase, a current used by the charging apparatus 1 for providing electric energy for the battery 2 is a charging current in a corresponding constant current charging phase, and a voltage of the battery 2 may increase. The charging apparatus 1 may determine, based on a voltage threshold (also used to indicate a voltage for charging the battery 2 by using the voltage in the constant voltage charging phase), whether to charge the battery 2 by using the voltage in the constant voltage charging phase.

In the process in which the charging apparatus 1 charges the battery 2 in the constant voltage charging phase, the current of the battery 2 may decrease. The charging apparatus 1 may determine, based on a current threshold (also a current indicating that charging ends), whether to end charging the battery 2. For example, in the process in which the charging apparatus 1 charges the battery 2 in the constant voltage charging phase, when the current of the battery 2 decreases to the current threshold, the charging apparatus 1 may stop providing electric energy for the battery 2, and end charging the battery 2.

With reference to the accompanying drawings, the following specifically describes the process in which the charging apparatus 1 charges the battery 2. FIG. 2 is a schematic diagram of an example of a structure of the charging apparatus 1. The charging apparatus 1 may include a battery parameter collection module, a control module, and a voltage and current conversion module.

Refer to FIG. 2. The battery parameter collection module mainly includes a temperature collection unit and a voltage and current collection unit. The temperature collection unit may include at least one temperature sensor. The temperature collection unit may collect an internal temperature of the battery 2, and provide the collected temperature for the control module. The temperature collection unit may collect the internal temperature of the battery 2 in real time, or periodically collect the internal temperature of the battery 2, so that the control module may determine the internal temperature of the battery 2 based on one or more collected temperatures. For example, the battery 2 may include at least one single battery. The temperature collection unit may collect temperatures of one or more single batteries, and provide the temperatures for the control module. The control module may determine the internal temperature of the battery 2 based on the temperatures of the one or more single batteries by using a preset data processing method. For another example, the battery 2 may include at least one battery module, and each battery module may include at least one single battery. The temperature collection unit may collect temperatures of one or more single batteries in the battery module, and provide the temperatures for the control module. The control module may determine the internal temperature of the battery 2 based on the temperatures of the one or more single batteries by using a preset data processing method. For still another example, the battery 2 may include at least one battery system, and each battery system may include at least one battery module. The temperature collection unit may collect an internal temperature of each battery module, and provide the internal temperature for the control module. The control module may determine the internal temperature of the battery 2 based on temperatures of one or more battery modules by using a preset data processing method.

The voltage and current collection unit may include a voltage detection circuit. The voltage detection circuit may be connected to the battery 2, and is configured to detect a voltage of the battery 2. The voltage and current collection unit may include a current detection circuit. The current detection circuit may be connected to the battery 2, and is configured to detect a current of the battery 2. The voltage and current collection unit may collect the voltage and the current of the battery 2 in real time, or periodically collect the voltage and the current of the battery 2, so that the control module can determine an SOC of the battery 2 based on the collected voltage and the collected current, or control a process of charging the battery 2. For ease of distinguishing, the voltage of the battery 2 detected by the voltage detection circuit in the process in which the charging apparatus 1 charges the battery 2 is denoted as a charging voltage of the battery 2. The current of the battery 2 detected by the current detection circuit is recorded as a charging current of the battery 2.

In this embodiment of this application, the battery 2 may be a to-be-charged single battery, a to-be-charged battery module, or a to-be-charged battery system. The voltage of the battery 2 collected by the voltage and current collection unit may be a voltage of the single battery, a voltage of the battery module, or a voltage of the battery system. The current of the battery 2 collected by the voltage and current collection unit may be a current of the single battery, a current of the battery module, or a current of the battery system.

The control module may include one or more control circuits. The control circuit may include but is not limited to one or more of a processor, a chip, a chip system, or a controller, and is configured to control the process of charging the battery 2. The voltage and current conversion module is connected to the battery 2, and the voltage and current conversion module may include a voltage regulation circuit, a current regulation circuit, a transformer, or the like. The voltage and current conversion module may adjust or change, under control of the control module, a voltage or a current for inputting electric energy to the battery 2.

Generally, performance of the battery 2 varies with the internal temperature of the battery 2. Therefore, when internal temperatures of the battery 2 are different, charging efficiency of charging the battery 2 is different. To ensure charging efficiency of the battery 2, the control module may determine, based on the internal temperature of the battery 2, a charging parameter set used when the battery 2 is charged. Parameters in the charging parameter set are used by the charging apparatus 1 to charge the battery 2, for example, parameters such as a charging current and a charging voltage. The control module may include a memory, and the memory may store a correspondence between the temperature and the charging parameter set.

The correspondence between the temperature and the charging parameter set may include at least one temperature and a charging parameter set corresponding to the temperature. The memory may store the correspondence between the temperature and the charging parameter set in a form of a table. In an example, in the correspondence between the temperature and the charging parameter set, each temperature corresponds to a different charging parameter set. In another example, the correspondence between the temperature and the charging parameter set includes a plurality of temperature sets, and each temperature set corresponds to a different charging parameter set. One temperature set may include one or more temperatures. Temperatures in any two temperature sets are different.

The battery parameter collection module may provide the collected temperature for the control module. In this manner, the control module may obtain the internal temperature of the battery 2. The control module may search the correspondence between the temperature and the charging parameter set for a charging parameter set corresponding to the collected temperature. For example, the control module may determine the to-be-charged battery 2 according to a received charging instruction. The control module may search the correspondence between the temperature and the charging parameter set for a charging parameter set corresponding to a first temperature based on a latest obtained internal temperature (denoted as a first temperature) of the to-be-charged battery 2.

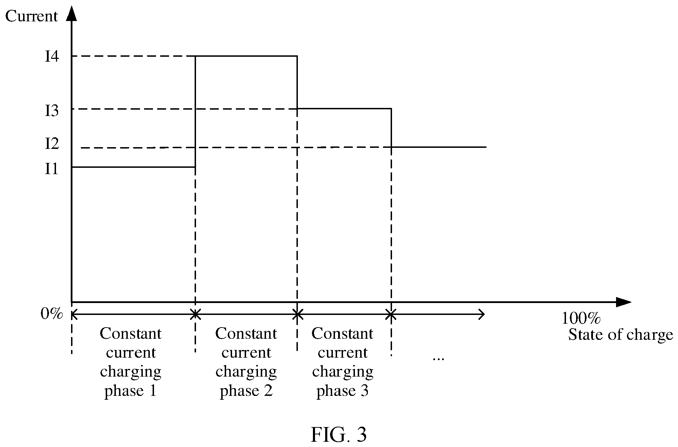

The following describes the charging parameter set. In a possible design, the charging parameter set may include a plurality of current values. The plurality of current values are charging currents in a plurality of constant current charging phases. As shown in FIG. 3, a process in which the charging apparatus 1 charges the battery 2 may include one or more constant current charging phases. The control module may control, based on a charging current in each constant current charging phase, the voltage and current conversion module to adjust a current for inputting electric energy to the battery 2.

In another possible design, the charging parameter set may include a voltage in a constant voltage charging phase and currents in a plurality of constant current charging phases. After controlling, based on a charging current in each constant current charging phase, the voltage and current conversion module to adjust a current for inputting electric energy to the battery 2, the control module may control, based on the voltage in the constant voltage charging phase, the voltage and current conversion module to adjust the current for inputting electric energy to the battery 2. Voltages in constant voltage charging phases in the charging parameter set corresponding to different temperatures or temperature sets may be the same or different. In other words, charging voltages in constant voltage charging phases in the process in which the charging apparatus 1 charges the battery 2 at different temperatures may be the same or may be different. For ease of description, the voltage in the constant voltage charging phase is denoted as a first voltage.

A state of charge (state of charge, SOC) of a battery can be used to represent a remaining capacity status of the battery. A value of the SOC is a ratio of a remaining capacity of the battery to a maximum available capacity of the battery. Generally, when the SOC is 100%, it may indicate that the battery is in a fully charged state; and when the SOC is 0%, it may indicate that the battery is in a fully discharged state. Generally, when the battery is in different SOCs, currents for charging the battery are different, and changes of expansion forces of the battery are also different. In this embodiment of this application, in a plurality of constant current charging phases included in each charging parameter set, an order of the constant current charging phases may be determined based on state of charge intervals corresponding to the constant current charging phases. As shown in FIG. 3, one constant current charging phase may correspond to one SOC interval (or set). For example, an SOC interval corresponding to a constant current charging phase 1 may be [0, SOC1], an SOC interval corresponding to a constant current charging phase 2 may be (SOC1, SOC2], ..., and an SOC interval corresponding to a constant current charging phase n may be (SOC(i-1), SOCn]. Each SOC interval may include one or more SOCs. SOCs in any two SOC intervals are different. In two adjacent constant current charging phases in the plurality of constant current charging phases, a value in an SOC interval corresponding to a previous-order constant current charging phase is less than an SOC interval corresponding to a current-order constant current charging phase. Alternatively, an order of the constant current charging phases may be determined in ascending order of minimum values in SOC intervals corresponding to the constant current charging phases.

The charging apparatus 1 may charge the battery 2 by using currents in some or all of the plurality of constant current charging phases. When the to-be-charged battery 2 is in different SOCs, currents in constant current charging phases used by the charging apparatus 1 to charge the battery 2 may not be exactly the same. Before charging the battery 2, the control module may select a charging current in at least one constant current charging phase from the charging currents in the plurality of constant current charging phases based on the SOC of the battery 2. The charging current in the at least one constant current charging phase may include a charging current in a constant current charging phase corresponding to an SOC interval to which the SOC of the battery 2 belongs and a charging current in a constant current charging phase corresponding to a state of charge interval, where a value in this state of charge interval is greater than that in the state of charge interval of the state of charge. A quantity of charging currents in the at least one constant current charging phase is less than or equal to a quantity of charging currents in the plurality of constant current charging phases. Alternatively, the charging current in the at least one constant current charging phase is an SOC interval to which the SOC of the battery 2 belongs.

For example, the control module may store a correspondence between each constant current charging phase and an SOC interval, to select a charging current for charging the battery 2 in a constant current charging phase from the correspondence between each constant current charging phase and the SOC interval. The control module may prestore a correspondence between a constant current charging phase order and an SOC. The correspondence between the constant current charging phase order and the SOC may be used to determine at least one constant current charging phase in which the battery 2 is charged. The correspondence between the constant current charging phase order and the SOC may include at least one SOC and a constant current charging phase order corresponding to the SOC. The memory may store the correspondence between the SOC and the constant current charging phase order in a form of a table. In an example, in the correspondence between the constant current charging phase order and the SOC, each SOC corresponds to a different constant current charging phase order. In another example, the correspondence between the constant current charging phase order and the SOC may include an order of a first constant current charging phase (any one of the plurality of constant current charging phases) in the plurality of constant current charging phases and an SOC interval corresponding to the first constant current charging phase.

The control module may search, based on the SOC (denoted as a first SOC) of the battery 2, the correspondence between the SOC and the constant current charging phase order for an order of a constant current charging phase (denoted as a target order) corresponding to the first SOC. The control module selects, according to the target order, a constant current charging phase whose order is greater than or equal to the target order from the plurality of constant current charging phases. In the selected at least one constant current charging phase, the constant current charging phases may also be sequentially sorted. In charging currents in any two adjacent constant current charging phases, a value in an SOC interval corresponding to a previous-order constant current charging phase is less than a value in an SOC interval corresponding to a current-order constant current charging phase.

As shown in FIG. 3, a plurality of constant current charging phases included in a first charging parameter set are sequentially a constant current charging phase 1, a constant current charging phase 2, a constant current charging phase 3, ..., and a constant current charging phase n. When the target order is 1, the selected at least one constant current charging phase is the constant current charging phase 1 to the constant current charging phase n, and the selected at least one constant current charging phase is all constant current charging phases included in the first charging parameter set. When the target order is i, the selected at least one constant current charging phase is the constant current charging phase i to the constant current charging phase n. When the target order is n, the selected at least one constant current charging phase is the constant current charging phase n.

After the control module searches the first charging parameter set corresponding to the first temperature, the control module may select, based on the SOC of the battery 2, the at least one constant current charging phase from the plurality of constant current charging phases in the first charging parameter set. The control module may charge the battery 2 by using the charging current in the selected at least one constant current charging phase.

If a quantity of charging currents in the selected at least one constant current charging phase is 1, the control module may control, based on the charging current in the selected constant current charging phase, the voltage and current conversion module to determine the current for charging the battery 2 as the charging current in the selected constant current charging phase.

If a quantity of charging currents in the selected at least one constant current charging phase is not less than 2, in the process in which the charging apparatus 1 charges the battery 2, the charging apparatus 1 may adjust (or switch) a constant current charging phase, that is, adjust a current for providing electric energy for the battery 2 based on an expansion force of the battery 2, to reduce the expansion force of the battery 2. The control module may control, based on a charging current in a first constant current charging phase (a charging current in a 1^{st}-order constant current charging phase) of charging currents in selected at least two constant current charging phases, the voltage and current conversion module to determine the current for charging the battery 2 as the charging current in the first constant current charging phase. The control module may determine, based on the expansion force of the battery 2, whether to control the voltage and current conversion module to adjust the current for charging the battery 2 from the current in the 1^{st}-order constant current charging phase to a charging current in a next-order constant current charging phase of the 1^{st}-order constant current charging phase (that is, a charging current in a 2^{nd}-order constant current charging phase). The control module may control the voltage and current conversion module to adjust the current for providing electric energy for the battery 2 from the current in the 1^{st}-order constant current charging phase to the charging current in the 2^{nd}-order constant current charging phase, that is, control the voltage and current conversion module to determine the current for charging the battery 2 as the charging current in the 2^{nd}-order constant current charging phase. The control module may determine, based on the expansion force of the battery 2, whether to adjust from the charging current in the 2^{nd}-order constant current charging phase to a charging current in a next-order constant current charging phase of the 2^{nd}-order constant current charging phase (that is, a charging current in a 3^{rd}-order constant current charging phase).

Similarly, the control module may control the voltage and current conversion module to determine the current for charging the battery 2 as a charging current in a k^{th}-order constant current charging phase. Then, it may be determined, based on the expansion force of the battery 2, whether to control the voltage and current conversion module to adjust the current for charging the battery 2 from the charging current in the k^{th}-order constant current charging phase to a charging current in a (k+1)^{th}-order constant current charging phase. In the process of charging the battery 2, an initial value of k may be 1. For ease of description, the k^{th}-order constant current charging phase is denoted as a constant current charging phase k, and the (k+1)^{th}-order constant current charging phase is denoted as a constant current charging phase k+1, where k is a positive integer. If a quantity of charging currents of the selected at least two constant current charging phases is m, k does not exceed m-1. In this design, in the process in which the charging apparatus 1 charges the battery 2, the charging apparatus 1 can adjust, based on the expansion force of the battery 2, the current for charging the battery 2, to control a change of the expansion force of the battery 2, so that a structure of the battery system in which the battery 2 is located is stable, and a service life of the battery 2 can also be prolonged.

The following describes a manner in which the control module obtains (or determines) the expansion force of the battery 2. In a possible implementation, the control module may store a correspondence between a battery status parameter and an expansion force. The control module may search the correspondence between the battery status parameter and the expansion force for an expansion force corresponding to any battery status parameter (which may be denoted as a first battery status parameter). The battery status parameter may include but is not limited to one or more of an SOC of the battery, a temperature of the battery, a current of the battery, and the like. The control module may search the correspondence between the battery status parameter and the expansion force for the expansion force corresponding to the first battery status parameter, so as to determine the expansion force of the battery 2.

The correspondence between the battery status parameter and the expansion force may include but is not limited to one or more of the following relationships:
a correspondence between the expansion force and the SOC, a correspondence between the expansion force and the current of the battery, a correspondence between the expansion force and the temperature of the battery, a correspondence between the expansion force, the SOC, and the temperature of the battery, a correspondence between the expansion force, the SOC, and the current of the battery, a correspondence between the expansion force, the SOC, the temperature of the battery, and the current of the battery, and the like.

The correspondence between the battery status parameter and the expansion force may be determined in advance. For example, a plurality of batteries are selected, and a charging and discharging test with a depth of 100% discharge is performed on the batteries at different temperatures by using different charging currents. During the test, each battery is placed in a fixture with a pressure sensor, and a plurality of temperature sensors are deployed around the battery. The pressure sensor and the temperature sensor are configured to record an expansion force of each battery and a temperature of each battery in a process of charging and discharging each battery. Generally, an SOC of the battery may be determined based on a current and/or a voltage of the battery. Changes of the temperature, the expansion force, and the SOC of the battery when the battery is charged by using different charging currents are recorded, and may be used to determine a change relationship between the expansion force and the SOC, a change relationship between the expansion force and the temperature, a change relationship between the expansion force and the charging current, and the like. These change relationships may be used to determine the correspondence between the battery status parameter and the expansion force.

The control module may determine, according to the prestored correspondence between the battery status parameter and the expansion force, an expansion force corresponding to the first battery status parameter of the battery 2, so as to determine the expansion force of the battery 2. For example, the control module may search, according to the correspondence between the temperature and the expansion force, for an expansion force corresponding to a second temperature. The second temperature may be an internal temperature of the battery 2 in a process in which the control module controls the voltage and current conversion module to charge the battery 2 by using the charging current in the constant current charging phase i. Then, the control module may adjust the process of charging the battery 2 based on the expansion force of the battery 2. This charging manner may be an embedded charging manner.

In another possible implementation, the battery parameter collection module may include a pressure sensor, and the pressure sensor may be disposed between the battery 2 and an external structure of the battery 2. The pressure sensor may be configured to collect the expansion force of the battery 2, and provide the expansion force for the control module. In this manner, the control module may obtain the expansion force of the battery 2. The control module may adjust the process of charging the battery 2 based on the expansion force of the battery 2. This charging manner may be a non-embedded charging manner.

It should be noted that a manner in which the control module determines the expansion force of the battery 2 may include but is not limited to the foregoing example. Alternatively, another manner may be used to determine the expansion force of the battery 2 or obtain expansion force information of the battery 2. This is not specifically limited in this application.

Because the battery 2 may expand in the process of charging, to reduce the expansion force of the battery 2 in the process of charging, the control module may control, based on the expansion force of the battery 2, the voltage and current conversion module to adjust the current or the voltage for providing electric energy for the battery 2. When the charging voltage of the battery 2 does not reach the voltage threshold, the following process is performed until the charging voltage of the battery 2 reaches the voltage threshold. The control module may determine, based on the expansion force of the battery 2, whether to control the voltage and current conversion module to adjust the current for providing electric energy for the battery 2 from a charging current in the constant current charging phase k to a charging current in the constant current charging phase k+1, where k is a positive integer, an initial value of k may be 1, and k may be 1 to m-1.

In a possible implementation, when the expansion force of the battery 2 meets a preset condition corresponding to the constant current charging phase k, the control module may control the voltage and current conversion module to adjust the current for providing electric energy for the battery 2 from the charging current in the constant current charging phase k to a charging current in the constant current charging phase k+1. When the expansion force of the battery 2 does not meet the preset condition corresponding to the constant current charging phase k, the control module may control the voltage and current conversion module to keep the current for providing electric energy for the battery 2 as the charging current corresponding to the constant current charging phase k. Different constant current charging phases may correspond to different preset conditions, and a preset condition corresponding to each constant current charging phase may be one of the following conditions:
Condition 1: The expansion force of the battery 2 is greater than or equal to an expansion force parameter threshold in the current constant current charging phase, where the expansion force parameter threshold is a maximum value to which the expansion force increases in the current constant current charging phase.
Condition 2: A first change rate of the expansion force of the battery 2 is greater than or equal to a first threshold in the current constant current charging phase, where the first change rate is a ratio of the expansion force of the battery 2 to the SOC of the battery 2, and the first threshold is a maximum value to which the first change rate increases in the current constant current charging phase.
Condition 3: A first change rate of the expansion force of the battery 2 is less than or equal to a second threshold in the current constant current charging phase, where the second threshold is a minimum value to which the first change rate decreases in the current constant current charging phase.
Condition 4: A first change rate of the expansion force is a first preset value, where the first preset value indicates a maximum value or a minimum value that is of the expansion force of the battery module in the current constant current charging phase and that is reached by the expansion force.
Condition 5: A second change rate of the expansion force of the battery 2 is a second preset value, where the second change rate is a ratio of a first change rate to a state of charge of the battery 2, and the second preset value indicates that a maximum value or a minimum value that is of the first change rate of the expansion force in the current constant current charging phase and that is reached by the first change rate.
Condition 6: The current constant current charging phase is a non-first constant current charging phase in the plurality of constant current charging phases, the expansion force of the battery 2 is equal to a third preset value, the third preset value is determined based on a maximum value of the expansion force of the battery 2 in a constant current charging phase before the current constant current charging phase and a preset proportion, and the preset proportion is less than 1.

The first change rate of the expansion force of the battery may also be a change rate of an expansion force P of the battery relative to the SOC of the battery 2 or a first-order derivative of the expansion force P of the battery and the SOC of the battery 2. The first change rate may be denoted as dP/dSOC. The first change rate of the expansion force of the battery may represent a speed at which the expansion force P of the battery changes with the SOC of the battery 2. The second change rate of the expansion force of the battery may also be a change rate of the first change rate dP/dSOC of the battery relative to the SOC of the battery 2 or a second-order derivative of the expansion force P of the battery and the SOC of the battery 2. The second change rate may be denoted as d²P/d²SOC. The second change rate of the expansion force of the battery may represent a speed at which the first change rate of the expansion force of the battery changes with the SOC of the battery 2. It should be understood that the preset condition corresponding to each constant current charging phase may be a condition related to the change of the expansion force of the battery 2, such as the expansion force of the battery 2, the first change rate of the expansion force of the battery 2, or the second change rate of the expansion force of the battery 2.

The following separately describes each preset condition. It is assumed that the constant current charging phase i may be any one of the two constant current charging phases selected by the control module.

In an example, a condition corresponding to the constant current charging phase i may be the condition 1, and an expansion force parameter threshold in the constant current charging phase i is a maximum value to which the expansion force can be increased in the constant current charging phase i. When the expansion force of the battery 2 meets the condition 1, that is, when the expansion force of the battery 2 is greater than or equal to the expansion force parameter threshold in the constant current charging phase i, the control module may control the voltage and current conversion module to adjust the current for providing electric energy for the battery 2 from the charging current in the constant current charging phase i to a charging current in a next-order constant current charging phase of the constant current charging phase i, that is, adjust to charge the battery 2 by using a charging current in a constant current charging phase i+1. In this process, the constant current charging phase i may be switched to the constant current charging phase i+1.

When the expansion force of the battery 2 does not meet the condition 1, that is, when the expansion force of the battery 2 is less than the expansion force parameter threshold corresponding to the constant current charging phase i, the control module may control the voltage and current conversion module to keep the current for providing electric energy for the battery 2 as the charging current in the constant current charging phase i.

The expansion force parameter threshold in the constant current charging phase i may be predetermined or preconfigured. If a condition corresponding to a constant current charging phase j is the condition 1, the expansion force parameter threshold corresponding to the constant current charging phase i and an expansion force parameter threshold corresponding to the constant current charging phase j (any one of the two selected constant current charging phases, and j is not equal to i) may be a same value or may be different values.

In another example, a condition corresponding to the constant current charging phase i may be the condition 2, and the first threshold in the constant current charging phase i is a maximum value to which the first change rate of the expansion force of the battery may increase in the constant current charging phase i. When the expansion force of the battery 2 meets the condition 2, that is, when the first change rate of the expansion force of the battery 2 is greater than or equal to the first threshold in the constant current charging phase i, the control module may control the voltage and current conversion module to adjust the current for providing electric energy for the battery 2 from the charging current in the constant current charging phase i to a charging current in a constant current charging phase i+1.

The voltage and current conversion module determines current for providing electric energy for the battery 2 as the charging current in the constant current charging phase i. In this process, the first change rate of the expansion force of the battery 2 is greater than or equal to the first threshold in the constant current charging phase i. This may reflect that a speed at which the expansion force of the battery 2 changes with the SOC of the battery 2 is fast, and the current for providing electric energy for the battery 2 needs to be changed to change the change speed of the expansion force of the battery 2, thereby changing the expansion force of the battery 2.

When the expansion force of the battery 2 does not meet the condition 2, that is, when the expansion force of the battery 2 is less than the first threshold in the constant current charging phase i, the control module may control the voltage and current conversion module to keep the current for providing electric energy for the battery 2 as the charging current in the constant current charging phase i.

The first threshold in the constant current charging phase i may be predetermined or preconfigured. If a condition corresponding to a constant current charging phase j is the condition 2, the first threshold corresponding to the constant current charging phase i and a first threshold corresponding to the constant current charging phase j may be a same value or may be different values.

In still another example, a condition corresponding to the constant current charging phase i may be the condition 3, and the second threshold in the constant current charging phase i is a minimum value to which the first change rate of the expansion force of the battery 2 decreases in the constant current charging phase i. When the expansion force of the battery 2 meets the condition 3, that is, when the first change rate of the expansion force of the battery 2 is less than or equal to the second threshold in the constant current charging phase i, the control module may control the voltage and current conversion module to adjust the current for providing electric energy for the battery 2 from the charging current in the constant current charging phase i to a charging current in a constant current charging phase i+1.

The voltage and current conversion module determines the current for providing electric energy for the battery 2 as the charging current in the constant current charging phase i. In this process, the first change rate of the expansion force of the battery 2 is less than or equal to the second threshold in the constant current charging phase i. This may reflect that a speed at which the expansion force of the battery 2 changes with the SOC of the battery 2 is slow, and the current for providing electric energy for the battery 2 needs to be changed to change the change speed of the expansion force of the battery 2, thereby changing the expansion force of the battery 2.

When the expansion force of the battery 2 does not meet the condition 3, that is, when the expansion force of the battery 2 is greater than the first threshold in the constant current charging phase i, the control module may control the voltage and current conversion module to keep the current for providing electric energy for the battery 2 as the charging current in the constant current charging phase i.

The second threshold in the constant current charging phase i may be predetermined or preconfigured. If a condition corresponding to a constant current charging phase j is the condition 3, the second threshold in the constant current charging phase i and a second threshold in the constant current charging phase j may be a same value or may be different values.

In still another example, a condition corresponding to the constant current charging phase i may be the condition 4. When the expansion force of the battery 2 meets the condition 4, that is, when the first change rate of the expansion force of the battery 2 is equal to the first preset value, the control module may control the voltage and current conversion module to adjust the current for providing electric energy for the battery 2 from the charging current in the constant current charging phase i to a charging current in a constant current charging phase i+1. In this embodiment of this application, the first preset value may be 0, and the voltage and current conversion module determines the current for providing electric energy for the battery 2 as the charging current in the constant current charging phase i. In this process, when the first change rate of the expansion force of the battery 2 is 0, it may reflect that the expansion force of the battery 2 reaches a maximum value or a minimum value. For example, when the first change rate of the expansion force of the battery 2 is 0 for the first time, the expansion force of the battery 2 reaches the maximum value. When the first change rate of the expansion force of the battery 2 is 0 again, the expansion force of the battery 2 decreases to the minimum value.

When the expansion force of the battery 2 does not meet the condition 4, that is, when the first change rate of the expansion force of the battery 2 is not equal to 0, the control module may control the voltage and current conversion module to keep the current for providing electric energy for the battery 2 as the charging current in the constant current charging phase i.

In yet another example, a condition corresponding to the constant current charging phase i may be the condition 5. When the expansion force of the battery 2 meets the condition 5, that is, when the second change rate of the expansion force of the battery 2 is equal to the second preset value, the control module may control the voltage and current conversion module to adjust the current for providing electric energy for the battery 2 from the charging current in the constant current charging phase i to a charging current in a constant current charging phase i+1. In this embodiment of this application, the second preset value may be 0. The voltage and current conversion module determines the current for providing electric energy for the battery 2 as the charging current in the constant current charging phase i. In this process, the second change rate of the expansion force of the battery 2 is 0. It can be learned that the change speed at which the first change rate of the expansion force of the battery 2 changes with the SOC of the battery 2 tends to be stable or the first change rate of the expansion force of the battery 2 is stable at a value. In this case, the expansion force of the battery 2 changes at a constant change speed. For example, the expansion force of the battery 2 increases or decreases at the constant change speed, and the current for providing electric energy for the battery 2 needs to be changed, so as to change the expansion force of the battery 2.

When the expansion force of the battery 2 does not meet the condition 5, that is, when the second change rate of the expansion force of the battery 2 is not equal to the second preset value, the control module may control the voltage and current conversion module to keep the current for providing electric energy for the battery 2 as the charging current in the constant current charging phase i.

In yet another example, a condition corresponding to the constant current charging phase i may be the condition 6. When the expansion force of the battery 2 meets the condition 6, that is, the constant current charging phase i is not a 1^{st}-order constant current charging phase in the selected at least two constant current charging phases, and the expansion force of the battery 2 reaches a third preset value. The third preset value may be determined based on a preset proportion and a peak value of the expansion force (a maximum value of the expansion force) of the battery 2 in a constant current charging phase whose order is before the constant current charging phase i. For example, the second value is a product of the preset proportion and the peak value of the expansion force. Optionally, the preset proportion may be 0.5, and the third preset value is half of the peak value of the expansion force of the battery 2 in the constant current charging phase whose order is before the constant current charging phase i. In this case, the control module may control the voltage and current conversion module to adjust the current for providing electric energy for the battery 2 from the charging current in the constant current charging phase i to a charging current in a constant current charging phase i+1.

When the expansion force of the battery 2 does not meet the condition 6, that is, when the expansion force of the battery 2 is not equal to the third preset value, the control module may control the voltage and current conversion module to keep the current for providing electric energy for the battery 2 as the charging current in the constant current charging phase i.

In this embodiment of this application, the condition corresponding to each constant current charging phase may be set based on a change feature of the expansion force of the battery 2. Conditions corresponding to different constant current charging phases may be the same or different.

In the process in which the charging apparatus 1 charges the battery 2, because the battery 2 receives electric energy, the charging voltage of the battery 2 increases. The battery parameter collection module may collect the charging voltage (denoted as a second voltage) of the battery 2, and provide the charging voltage for the control module. The control module may prestore the voltage threshold, and the voltage threshold is a voltage value indicating the control module to control the voltage and current conversion module to charge the battery 2 by using the voltage in the constant voltage charging phase. If the second voltage reaches the voltage threshold, that is, the second voltage is greater than or equal to the voltage threshold, the control module may control the voltage and current conversion module to adjust the voltage for inputting electric energy to the battery 2 to the first voltage (that is, the voltage in the constant voltage charging phase) and enter the constant voltage charging phase until the charging current of the battery 2 is less than the current threshold. In other words, the voltage and current conversion module may keep charging the battery 2 by using the first voltage between a first moment at which the second voltage reaches the voltage threshold and a second moment at which the current of the battery 2 is less than the current threshold. Generally, the first voltage is less than or equal to the voltage threshold. If the second voltage does not reach the voltage threshold, that is, the second voltage is less than the voltage threshold, the control module may control the voltage and current conversion module to adjust the current for inputting electric energy to the battery 2 to a current in each constant current charging phase. In this case, the battery 2 is in the constant current charging phase in the process of charging the battery 2.

In a possible case, an initial temperature of the to-be-charged battery 2 is very low, causing low performance of the battery 2, and affecting charging efficiency. If an internal temperature of the to-be-charged battery 2 (the initial temperature of the battery 2) is less than a temperature threshold, the control module may charge the battery 2 by using a charging current in a first constant current charging phase in selected at least one constant current charging phase until the internal temperature of the battery 2 is greater than or equal to a preset temperature. Generally, the preset temperature is greater than or equal to the temperature threshold. The temperature threshold is a temperature indicating to adjust the current for charging the battery module from the charging current in the first constant current charging phase to a charging current in a next constant current charging phase of the first constant current charging phase. Then, the control module may adjust the current for charging the battery 2 to the charging current in the next constant current charging phase of the first constant current charging phase. In such a design, when the battery 2 is in a low temperature environment, the control module controls the voltage and current conversion module to keep the current for providing electric energy for the battery 2 as the charging current in the first constant current charging phase in the selected at least one constant current charging phase, so that the temperature of the battery 2 can rise until the temperature of the battery 2 rises to the preset temperature. The temperature of the battery 2 rises, so that performance of the battery 2 is improved, thereby improving charging efficiency of the battery 2.

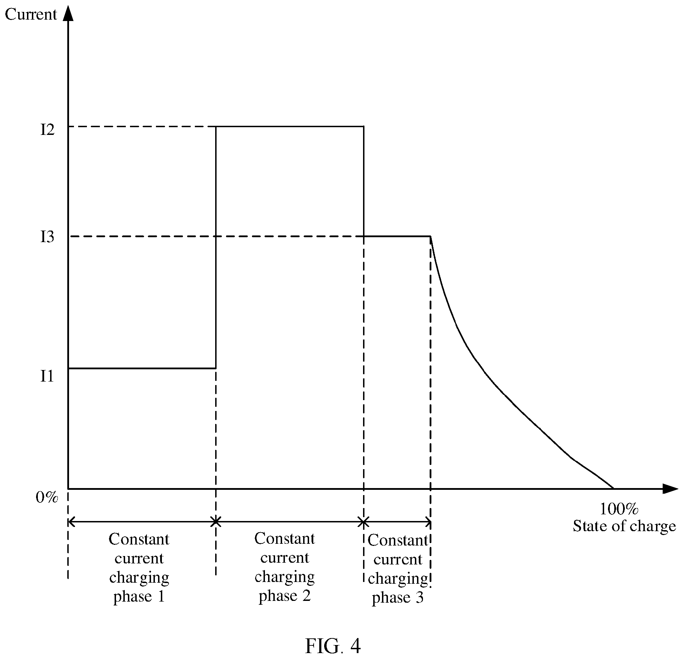

To facilitate understanding of the process in which the charging apparatus 1 adjusts or switches, based on the expansion force of the battery 2, the current for charging the battery 2 in the process of charging the battery 2, the following provides an example for description with reference to the accompanying drawings. In a possible design, as shown in FIG. 4, it is assumed that charging currents in the plurality of constant current charging phases included in the first charging parameter set are a charging current in the constant current charging phase 1, a charging current in the constant current charging phase 2, and a charging current in the constant current charging phase 3. The charging current that is in the constant current charging phase, that is selected by the control module from the charging currents in the plurality of constant current charging phases, and that is used to charge the battery 2 may be the charging current in the constant current charging phase 1, the charging current in the constant current charging phase 2, and the charging current in the constant current charging phase 3. The charging current in the constant current charging phase 1 is I1, the charging current in the constant current charging phase 2 is I2, and the charging current in the constant current charging phase is 13. A condition corresponding to each constant current charging phase is the condition 1. The control module controls the voltage and current conversion module to determine the charging current for providing electric energy for the battery 2 as the charging current I1 in the constant current charging phase 1. When the expansion force of the battery 2 is less than an expansion force parameter threshold in the constant current charging phase 1, the control module controls the voltage and current conversion module to keep the charging current for providing electric energy for the battery 2 as the charging current I1 in the constant current charging phase 1.

If the expansion force of the battery 2 is greater than or equal to an expansion force parameter threshold in the constant current charging phase 1, the control module controls the voltage and current conversion module to adjust the current for providing electric energy for the battery 2 as the charging current 12 in the constant current charging phase 2. In this case, the expansion force of the battery 2 is greater than or equal to an expansion force parameter threshold in the constant current charging phase 2, and the control module controls the voltage and current conversion module to adjust the current for providing electric energy for the battery 2 as the current I3 in the constant current charging phase 3. If the expansion force of the battery 2 is less than the expansion force parameter threshold in the constant current charging phase 2, the control module controls the voltage and current conversion module to keep the current for providing electric energy for the battery 2 as the charging current I2 in the constant current charging phase 2.

When the control module controls the voltage and current conversion module to determine the current for providing electric energy for the battery 2 as a current in any constant current charging phase, if the voltage of the battery 2 is greater than or equal to the voltage threshold, the control module controls the voltage and current conversion module to adjust the voltage for inputting electric energy to the battery 2 to the first voltage (that is, the voltage in the constant voltage charging phase) and enter the constant voltage charging phase until the charging current of the battery 2 is less than the current threshold. Refer to FIG. 4. A curve part is a change of a current of the battery 2 in the constant voltage charging phase. In the constant voltage charging phase, the voltage and current conversion module keeps the voltage for providing electric energy for the battery 2 as the first voltage, and the current of the battery 2 decreases until the charging current of the battery 2 is less than the current threshold. This may determine that the battery 2 has been charged.

In another possible design, as shown in FIG. 4, it is assumed that charging currents in the plurality of constant current charging phases included in the first charging parameter set are a charging current in the constant current charging phase 1, a charging current in the constant current charging phase 2, and a charging current in the constant current charging phase 3. The charging current that is in the constant current charging phase, that is selected by the control module from the charging currents in the plurality of constant current charging phases, and that is used to charge the battery 2 may be the charging current in the constant current charging phase 1, the charging current in the constant current charging phase 2, and the charging current in the constant current charging phase 3. The charging current in the constant current charging phase 1 is I1, the charging current in the constant current charging phase 2 is I2, and the charging current in the constant current charging phase is I3. A condition corresponding to each constant current charging phase is the condition 2. The control module controls the voltage and current conversion module to determine the current for providing electric energy for the battery 2 as the current I1 in the constant current charging phase 1. If the first change rate of the expansion force of the battery 2 is less than a first threshold in the constant current charging phase 1, the control module controls the voltage and current conversion module to keep the current for providing electric energy for the battery 2 as the current I1 in the constant current charging phase 1.

If the first change rate of the expansion force of the battery 2 is greater than or equal to a first threshold in the constant current charging phase 1, the control module controls the voltage and current conversion module to adjust the current for providing electric energy for the battery 2 as the current 12 in the constant current charging phase 2. In this case, the first change rate of the expansion force of the battery 2 is greater than or equal to a first threshold in the constant current charging phase 2, and the control module controls the voltage and current conversion module to adjust the current for providing electric energy for the battery 2 as the current I3 in the constant current charging phase 3. If the first change rate of the expansion force of the battery 2 is greater than or equal to the first threshold in the constant current charging phase 2, the control module controls the voltage and current conversion module to keep the current for providing electric energy for the battery 2 as the current I2 in the constant current charging phase 2.

When the control module controls the voltage and current conversion module to determine the current for providing electric energy for the battery 2 as a current in any constant current charging phase, if the second voltage of the battery 2 is greater than or equal to the voltage threshold, the control module controls the voltage and current conversion module to adjust the voltage for inputting electric energy to the battery 2 to the first voltage (that is, the voltage in the constant voltage charging phase) and enter the constant voltage charging phase until the charging current of the battery 2 is less than the current threshold.

It is assumed that charging currents in the plurality of constant current charging phases included in the first charging parameter set are a charging current in the constant current charging phase 1, a charging current in the constant current charging phase 2, and a charging current in the constant current charging phase 3. The charging current that is in the constant current charging phase, that is selected by the control module from the charging currents in the plurality of constant current charging phases, and that is used to charge the battery 2 may be the charging current in the constant current charging phase 1, the charging current in the constant current charging phase 2, and the charging current in the constant current charging phase 3. The charging current in the constant current charging phase 1 is I1, the charging current in the constant current charging phase 2 is I2, and the charging current in the constant current charging phase is 13.

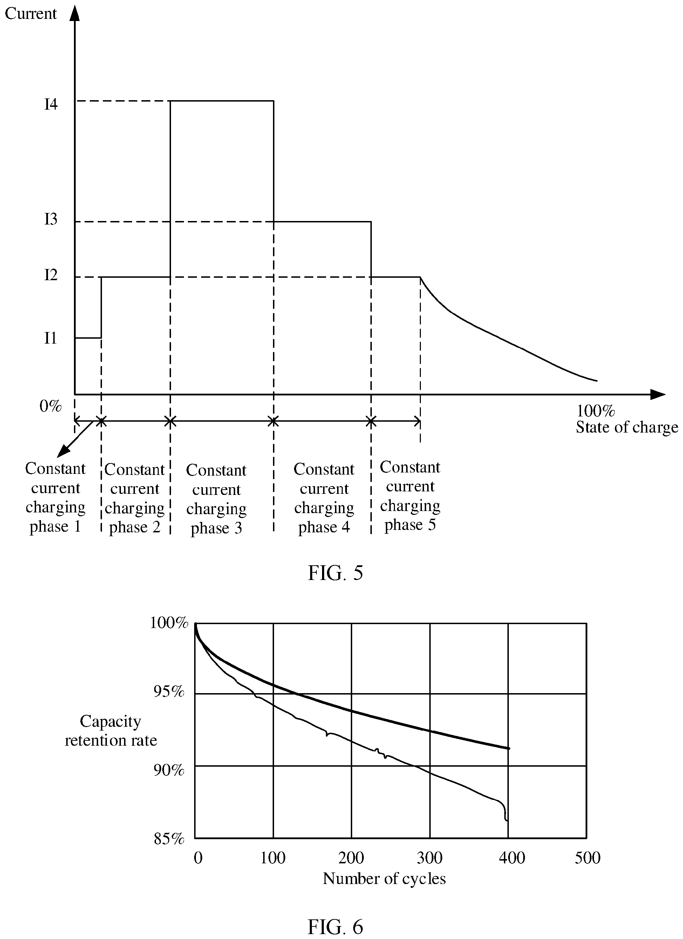

In a possible design, as shown in FIG. 5, it is assumed that charging currents in the plurality of constant current charging phases included in the first charging parameter set are a charging current in the constant current charging phase 1, a charging current in the constant current charging phase 2, a charging current in the constant current charging phase 3, a charging current in a constant current charging phase 4, and a charging current in a constant current charging phase 5. The charging current that is in the constant current charging phase, that is selected by the control module from the plurality of constant current charging phases and that is used to charge the battery 2 may be the charging current in the constant current charging phase 1, the charging current in the constant current charging phase 2, the charging current in the constant current charging phase 3, the charging current in a constant current charging phase 4, and the charging current in a constant current charging phase 5. The charging current in the constant current charging phase 1 is I1, the charging current in the constant current charging phase 2 is I2, the charging current in the constant current charging phase is 13, the charging current in the constant current charging phase 4 is I4, and the charging current in the constant current charging phase 5 is I5 and a value may be equal to I2. Conditions corresponding to the constant current charging phases may be not completely the same.

The control module may control the voltage and current conversion module to determine the charging current for providing electric energy for the battery 2 as the charging current I1 in the constant current charging phase 1. A condition corresponding to the constant current charging phase 1 is that a temperature of the battery 2 reaches a preset temperature, and the preset temperature may be greater than or equal to the temperature threshold. If the temperature of the battery 2 does not reach the preset temperature, the control module controls the voltage and current conversion module to keep the current for providing electric energy for the battery 2 as the charging current I1 in the constant current charging phase 1. If the temperature of the battery 2 reaches the preset temperature, the control module controls the voltage and current conversion module to adjust the charging current for providing electric energy for the battery 2 as the charging current 12 in the constant current charging phase 2.

A condition corresponding to the constant current charging phase 2 may be the condition 4. After the control module controls the voltage and current conversion module to determine the current for providing electric energy for the battery 2 as the charging current I2 in the constant current charging phase 2, if the first change rate of the expansion force of the battery 2 is equal to the first preset value (for example, 0), the control module controls the voltage and current conversion module to determine the current for providing electric energy for the battery 2 as the charging current I3 in the constant current charging phase 3. In this case, the expansion force of battery 2 reaches the maximum value. If the first change rate of the expansion force of the battery 2 is not equal to the first preset value, the control module controls the voltage and current conversion module to keep the charging current for providing electric energy for the battery 2 as the charging current I2 in the constant current charging phase 2.

A condition corresponding to the constant current charging phase 3 may be the condition 4. After the control module controls the voltage and current conversion module to determine the current for providing electric energy for the battery 2 as the charging current I3 in the constant current charging phase 3, if the first change rate of the expansion force of the battery 2 is equal to the first preset value (for example, 0), the control module controls the voltage and current conversion module to determine the current for providing electric energy for the battery 2 as the charging current I4 in the constant current charging phase 4, to reduce the expansion force of the battery 2. In this case, the expansion force of battery 2 reaches the minimum value. If the first change rate of the expansion force of the battery 2 is not equal to the first preset value, the control module controls the voltage and current conversion module to keep the current for providing electric energy for the battery 2 as the charging current I3 in the constant current charging phase 3.

A condition corresponding to the constant current charging phase 4 may be the condition 5 or the condition 6. For example, the condition corresponding to the constant current charging phase 4 is the condition 5. If the second change rate of the expansion force of the battery 2 is equal to the second preset value (for example, 0), the control module may control the voltage and current conversion module to adjust the current for providing electric energy for the battery 2 from the charging current I4 in the constant current charging phase to the charging current I5 in the constant current charging phase 5. If the second change rate of the expansion force of the battery 2 is not equal to the second preset value, the control module may control the voltage and current conversion module to keep the current for providing electric energy for the battery 2 as the charging current I4 in the constant current charging phase 4.

For another example, the condition corresponding to the constant current charging phase 4 is the condition 6. If the expansion force of the battery 2 is the third preset value, the third preset value may be half of a peak value of the expansion force of the battery 2 in a constant current charging phase before the constant current charging phase 4. In this case, the control module may control the voltage and current conversion module to adjust the current for providing electric energy for the battery 2 from the current in the constant current charging phase 4 to the charging current I5 in the constant current charging phase 5. If the expansion force of the battery 2 is not equal to the third preset value, the control module controls the voltage and current conversion module to keep the current for providing electric energy for the battery 2 as the charging current I4 in the constant current charging phase 4.

In the process in which the voltage and current conversion module provides electric energy for the battery 2, that is, in the process in which the voltage and current conversion module charges the battery 2, if the charging voltage of the battery 2 reaches the voltage threshold, the control module may control the voltage and current conversion module to adjust the voltage for providing electric energy for the battery 2 to the first voltage, and enter the constant voltage charging phase until the current of the battery 2 decreases to the current threshold, so that the process of charging the battery 2 can be completed.

Alternatively, a condition corresponding to the constant current charging phase 5 is that the voltage of the battery 2 reaches the voltage threshold. If the voltage of the battery 2 does not reach the voltage threshold, the control module controls the voltage and current conversion module to keep the current for providing electric energy for the battery 2 as the charging current I5 in the constant current charging phase 5. If the voltage of the battery 2 reaches the voltage threshold, the control module may control the voltage and current conversion module to adjust the voltage for providing electric energy for the battery 2 to the first voltage, and enter the constant voltage charging phase until the current of the battery 2 decreases to the current threshold, so that the process of charging the battery 2 can be completed.

In another possible design, as shown in FIG. 5, it is assumed that charging currents in the plurality of constant current charging phases included in the first charging parameter set are a charging current in the constant current charging phase 1, a charging current in the constant current charging phase 2, a charging current in the constant current charging phase 3, a charging current in a constant current charging phase 4, and a charging current in a constant current charging phase 5. The charging current that is in the constant current charging phase, that is selected by the control module from the plurality of constant current charging phases, and that is used to charge the battery 2 may be the charging current in the constant current charging phase 4 and the charging current in the constant current charging phase 5.

The control module may control the voltage and current conversion module to determine the charging current for providing electric energy for the battery 2 as the charging current I4 in the constant current charging phase 4. A condition corresponding to the constant current charging phase 4 may be the condition 5. If the second change rate of the expansion force of the battery 2 is equal to the second preset value (for example, 0), the control module may control the voltage and current conversion module to adjust the current for providing electric energy for the battery 2 from the charging current I4 in the constant current charging phase 4 to the charging current I5 in the constant current charging phase 5. If the second change rate of the expansion force of the battery 2 is not equal to the second preset value, the control module may control the voltage and current conversion module to keep the current for providing electric energy for the battery 2 as the charging current I4 in the constant current charging phase 4.

In the process in which the voltage and current conversion module provides electric energy for the battery 2, that is, in the process in which the voltage and current conversion module charges the battery 2, if the charging voltage of the battery 2 reaches the voltage threshold, the control module may control the voltage and current conversion module to adjust the voltage for providing electric energy for the battery 2 to the first voltage, and enter the constant voltage charging phase until the current of the battery 2 decreases to the current threshold, so that the process of charging the battery 2 can be completed.

Alternatively, a condition corresponding to the constant current charging phase 5 is that the voltage of the battery 2 reaches the voltage threshold. If the voltage of the battery 2 does not reach the voltage threshold, the control module controls the voltage and current conversion module to keep the current for providing electric energy for the battery 2 as the charging current I5 in the constant current charging phase 5. If the voltage of the battery 2 reaches the voltage threshold, the control module may control the voltage and current conversion module to adjust the voltage for providing electric energy for the battery 2 to the first voltage, and enter the constant voltage charging phase until the current of the battery 2 decreases to the current threshold, so that the process of charging the battery 2 can be completed.

The charging apparatus 1 provided in this application can effectively prolong the cycle life of the battery, and adjust, based on the expansion force of the battery 2, the current in the constant current charging phase in which the battery 2 is charged. Such a design can effectively reduce a change amount of the expansion force of the battery in a cycle process, and reduce side reactions caused by cycling of the battery. FIG. 6 shows a change of a number of cycles in which the charging apparatus 1 cyclically charges and discharges the battery and a capacity retention rate of the battery in a test environment in which an ambient temperature is 45°C and the battery is fully charged or discharged for two hours (that is, a charging rate is 0.5C). Refer to a thick black curve in FIG. 6. A complete charging process and a complete discharging process performed by the charging apparatus 1 on the battery are one cycle process. The number of cycles represents a quantity of times that the cycle process is completed. The capacity retention rate of the battery represents a ratio of a current maximum dischargeable capacity of the battery to an initial maximum dischargeable capacity of the battery. A fine black curve in FIG. 6 shows a change of a number of cycles of cyclic charging and discharging performed by an existing charging apparatus on a battery and a capacity retention rate of the battery. It can be learned that, when numbers of cycles are the same, in the manner of charging the battery by the charging apparatus 1 provided in this application, the capacity retention rate of the battery can be higher than that of the existing charging apparatus, so that a service life of the battery can be prolonged, that is, a cycle attenuation rate of the battery can be reduced.

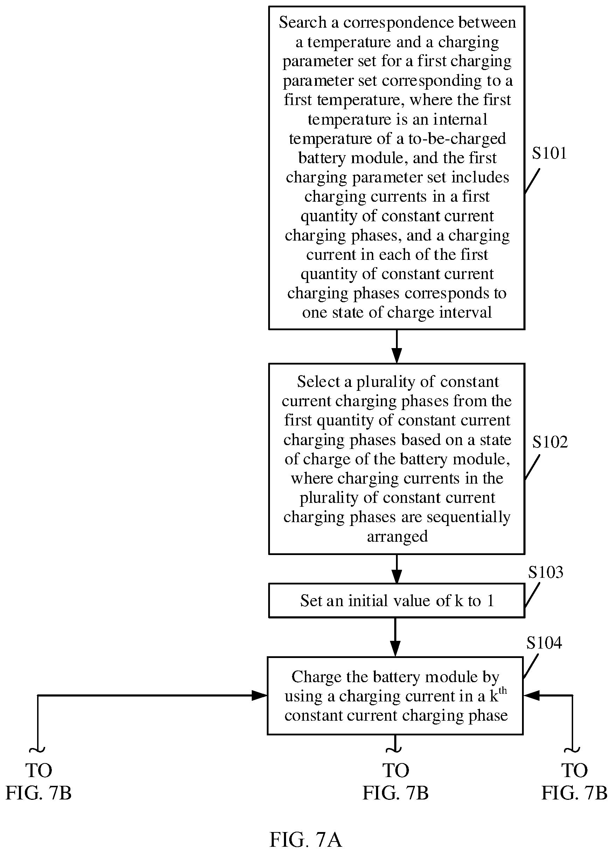

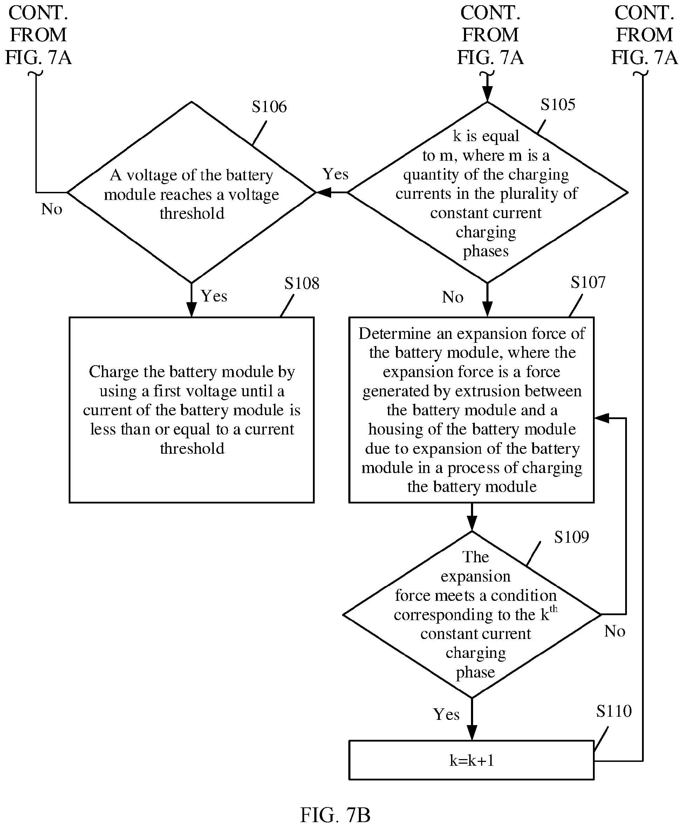

Based on the foregoing embodiment, this application further provides a charging method, applied to a scenario in which a lithium battery is charged. As shown in FIG. 7A and FIG. 7B, the method may include the following steps.

Step S101: Search a correspondence between a temperature and a charging parameter set for a first charging parameter set corresponding to a first temperature, where the first temperature is an internal temperature of a to-be-charged battery module, and the first charging parameter set includes charging currents in a first quantity of constant current charging phases, and a charging current in each of the first quantity of constant current charging phases corresponds to one state of charge interval.

Step S102: Select a plurality of constant current charging phases from the first quantity of constant current charging phases based on a state of charge of the battery module, where charging currents in the plurality of constant current charging phases are sequentially arranged.

A charging apparatus may select the charging currents in the plurality of constant current charging phases from the charging currents in the first quantity of constant current charging phases based on the state of charge of the battery module, where the charging currents in the plurality of constant current charging phases include a charging current in a constant current charging phase corresponding to a state of charge interval to which the state of charge belongs and a charging current in a constant current charging phase corresponding to a state of charge interval, where a value in this state of charge interval is greater than that in the state of charge interval of the state of charge, and a quantity of the charging currents in the plurality of constant current charging phases is less than or equal to the first quantity. When the charging currents in the plurality of constant current charging phases are sequentially arranged, in charging currents in two adjacent constant current charging phases, a value in a state of charge interval corresponding to a charging current in a previous-order constant current charging phase is less than a value in a state of charge interval corresponding to a charging current in a current-order constant current charging phase.

Step S103: Set an initial value of k to 1.

The charging apparatus may first charge the battery module by using a charging current in a 1^{st} constant current charging phase.

Step S104: Charge the battery module by using a charging current in a k^{th} constant current charging phase.

Step S105: Determine whether k is equal to m, where m is a quantity of the charging currents in the plurality of constant current charging phases; and if yes, perform step S106 next, or if no, perform step 107 next.

Step S106: Determine whether a voltage of the battery module reaches a voltage threshold, and if not, perform step S104 next, or if yes, perform step 108 next.

In a process in which the charging apparatus charges the battery module, the voltage of the battery module increases. If the voltage of the battery module reaches the voltage threshold, it may be determined that the constant current charging phase ends and a constant voltage charging phase is entered. Next, step S108 is performed.

Step S107: Determine an expansion force of the battery module, where the expansion force is a force generated by extrusion between the battery module and a housing of the battery module due to expansion of the battery module in the process of charging the battery module.

In this embodiment of this application, the charging apparatus may determine, based on the expansion force, whether to adjust a current for charging the battery module from the charging current in the k^{th} constant current charging phase to a charging current in a next-order constant current charging phase of the k^{th} constant current charging phase.

Step S108: Charge the battery module by using a first voltage until a current of the battery module is less than or equal to a current threshold.

The charging apparatus may charge the battery module by using a voltage in the constant voltage charging phase, that is, the first voltage. The first voltage is less than or equal to the voltage threshold, and the voltage threshold is a voltage indicating to charge the battery module based on the first voltage. In the constant voltage charging phase, the current of the battery module decreases. The battery module is kept being charged by using the first voltage between a first moment when the charging voltage of the battery module reaches the voltage threshold and a second moment when the charging current of the battery module is less than the current threshold, and the current threshold is a current indicating that charging ends.

Step S109: Determine whether the expansion force meets a condition corresponding to the k^{th} constant current charging phase; and if yes, perform step S110 next, or if no, perform step S107 next.

In a process in which the charging apparatus charges the battery module by using the charging current in the k^{th} constant current charging phase, if the expansion force of the battery module meets the condition corresponding to the k^{th} constant current charging phase, the charging apparatus charges the battery module by using the charging current in the next-order constant current charging phase of the k^{th} constant current charging phase. If the expansion force of the battery module does not meet the condition corresponding to the k^{th} constant current charging phase, the charging apparatus does not change the charging current of the battery module, re-determines the expansion force of the battery module, and determines whether the expansion force of the battery module meets the condition corresponding to the k^{th} constant current charging phase.

Conditions corresponding to different constant current charging phases may be different or may be the same. The condition corresponding to the k^{th} constant current charging phase may be one of the following conditions:
the expansion force is greater than or equal to an expansion force parameter threshold in the first constant current charging phase, where the expansion force parameter threshold is a maximum value to which the expansion force increases in the first constant current charging phase;
a first change rate of the expansion force is greater than or equal to a first threshold in the first constant current charging phase, where the first change rate is a ratio of the expansion force to a state of charge of the battery module, and the first threshold is a maximum value to which the first change rate increases in the current constant current charging phase;
a first change rate is less than or equal to a second threshold in the first constant current charging phase, where the second threshold is a minimum value to which the first change rate decreases in the first constant current charging phase;
a first change rate is a first preset value, where the first preset value indicates a maximum value or a minimum value that is of the expansion force of the battery module in the first constant current charging phase and that is reached by the expansion force;
a second change rate of the expansion force is a second preset value, where the second change rate is a ratio of a first change rate to a state of charge of the battery module, and the second preset value indicates a maximum value or a minimum value that is of the first change rate of the expansion force in the first constant current charging phase and that is reached by the first change rate; or
the first constant current charging phase is a non-1^{st}-order constant current charging phase in the charging currents in the plurality of constant current charging phases, the expansion force is equal to a third preset value, the third preset value is determined based on a maximum value of the expansion force of the battery module and a preset proportion, the preset proportion is less than 1, and the maximum value of the expansion force is a maximum value of the expansion force of the battery in the process of charging the battery module and before the charging current in the first constant current charging phase is used to charge the battery module.

Step S110: k=k+1.

In the process in which the charging apparatus charges the battery module by using the charging current in the k^{th} constant current charging phase, if the expansion force of the battery module meets the condition of the k^{th} constant current charging phase, the charging apparatus switches to charging the battery module by using the charging current in the next-order constant current charging phase of the k^{th} constant current charging phase. Alternatively, the value of k is updated to k+1, and then step S104 is performed.

In a possible design, if the internal temperature of the battery module is less than a temperature threshold, the battery module is charged by using the charging current in the 1^{st} constant current charging phase in the plurality of constant current charging phases until the internal temperature of the battery module reaches a preset temperature. The preset temperature is greater than or equal to the temperature threshold, and the temperature threshold is a temperature indicating to adjust the current for charging the battery module from the charging current in the 1 ^{st} constant current charging phase to a charging current in a 2^{nd} constant current charging phase, that is, k is set to 2. Then, the charging apparatus may perform the operation in step S 104.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), a semiconductor medium (for example, a solid state disk (solid state disk, SSD)), or the like.

An embodiment of this application further provides a readable storage medium, configured to store the methods or algorithms provided in the foregoing embodiments, for example, a random access memory (random access memory, RAM), a flash memory, a read-only memory (read-only memory, ROM), an EPROM memory, a non-volatile read-only memory (Electronic Programmable ROM, EPROM), a register, a hard disk, a removable disk, or a storage medium in any other form in the art.

Steps of the methods or algorithms described in embodiments of this application may be directly embedded into the charging apparatus. The charging apparatus may include a RAM memory, a flash memory, a ROM memory, an EPROM memory, a register, a hard disk, a removable disk, or a storage medium in any other form in the art, and is configured to store the steps of the methods or algorithms provided in embodiments of this application. For example, the storage medium may be connected to a control module or a processor (or a controller) in the charging apparatus, so that the control module and the processor (or the controller) may read information from the storage medium, and may write information into the storage medium. Optionally, the storage medium may be further integrated into the control module and the processor (or the controller).

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the scope of this application. Correspondingly, the specification and accompanying drawings are merely example description of this application defined by the appended claims, and are considered as any of or all modifications, variations, combinations or equivalents that cover the scope of this application.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A charging method, comprising:
charging a to-be-charged battery module by using a charging current in a first constant current charging phase, wherein the charging current in the first constant current charging phase is one of charging currents in a plurality of constant current charging phases, the charging currents in the plurality of constant current charging phases are used to charge the battery module, the charging currents in the plurality of constant current charging phases are sequentially arranged, and the charging current in the first constant current charging phase is a charging current in a non-last-order constant current charging phase;
determining an expansion force of the battery module, wherein the expansion force is a force generated by extrusion between the battery module and a housing of the battery module due to expansion of the battery module in a process of charging the battery module; and
determining, based on the expansion force, whether to adjust a current for charging the battery module from the charging current in the first constant current charging phase to a charging current in a second constant current charging phase, wherein the charging current in the second constant current charging phase is a charging current in a next-order constant current charging phase of the charging current in the first constant current charging phase.

2. The method according to claim 1, wherein the determining an expansion force of the battery module comprises:
searching a correspondence between a temperature and the expansion force for an expansion force corresponding to a first temperature, wherein the first temperature is an internal temperature of the battery module in the process of charging the battery module by using the charging current in the first constant current charging phase; or
collecting the expansion force of the battery module.

3. The method according to claim 1 or 2, wherein the determining, based on the expansion force, whether to adjust a current for charging the battery module from the charging current in the first constant current charging phase to a charging current in a second constant current charging phase comprises:
if the expansion force meets a preset condition corresponding to the first constant current charging phase, adjusting the current for charging the battery module from the charging current in the first constant current charging phase to the charging current in the second constant current charging phase; or
if the expansion force does not meet a preset condition, keeping charging the battery module by using the charging current in the first constant current charging phase.

4. The method according to claim 3, wherein the preset condition is one of the following conditions:
the expansion force is greater than or equal to an expansion force parameter threshold in the first constant current charging phase, wherein the expansion force parameter threshold is a maximum value to which the expansion force increases in the first constant current charging phase;
a first change rate of the expansion force is greater than or equal to a first threshold in the first constant current charging phase, wherein the first change rate is a ratio of the expansion force to a state of charge of the battery module, and the first threshold is a maximum value to which the first change rate increases in the current constant current charging phase;
a first change rate is less than or equal to a second threshold in the first constant current charging phase, wherein the second threshold is a minimum value to which the first change rate decreases in the first constant current charging phase;
a first change rate is a first preset value, wherein the first preset value indicates a maximum value or a minimum value that is of the expansion force of the battery module in the first constant current charging phase and that is reached by the expansion force;
a second change rate of the expansion force is a second preset value, wherein the second change rate is a ratio of a first change rate to a state of charge of the battery module, and the second preset value indicates a maximum value or a minimum value that is of the first change rate of the expansion force in the first constant current charging phase and that is reached by the first change rate; or
the first constant current charging phase is a non-1^{st}-order constant current charging phase in the charging currents in the plurality of constant current charging phases, the expansion force is equal to a third preset value, the third preset value is determined based on a maximum value of the expansion force of the battery module and a preset proportion, the preset proportion is less than 1, and the maximum value of the expansion force is a maximum value of the expansion force of the battery in the process of charging the battery module and before the charging current in the first constant current charging phase is used to charge the battery module.

5. The method according to any one of claims 1 to 4, wherein the charging current in the second constant current charging phase is a charging current in a last-order constant current charging phase in the charging currents in the plurality of constant current charging phases; and after the adjusting the current for charging the battery module from the charging current in the first constant current charging phase to the charging current in the second constant current charging phase, the method further comprises:
keeping charging the battery module by using a first voltage between a first moment when a charging voltage of the battery module reaches a voltage threshold and a second moment when the charging current of the battery module is less than a current threshold, wherein the voltage threshold is a voltage indicating to charge the battery module based on the first voltage, the first voltage is less than or equal to the voltage threshold, and the current threshold is a current indicating that charging ends.

6. The method according to any one of claims 1 to 5, wherein the charging current in the first constant current charging phase is a charging current in a 2^{nd}-order constant current charging phase in the charging currents in the plurality of constant current charging phases; and before the charging a to-be-charged battery module by using a charging current in a first constant current charging phase, the method further comprises:
if an internal temperature of the battery module is less than a temperature threshold, charging the battery module by using a charging current in a 1^{st}-order constant current charging phase in the plurality of constant current charging phases until the internal temperature of the battery module reaches a preset temperature, wherein the preset temperature is greater than or equal to the temperature threshold, and the temperature threshold is a temperature indicating to adjust the current for charging the battery module from the charging current in the 1^{st}-order constant current charging phase to the charging current in the 2^{nd}-order constant current charging phase.

7. The method according to any one of claims 1 to 6, wherein before the charging a battery module by using a charging current in a first constant current charging phase, the method further comprises:
searching a correspondence between the temperature and a charging parameter set for a first charging parameter set corresponding to the internal temperature of the battery module, wherein the first charging parameter set comprises charging currents in a first quantity of constant current charging phases, and a charging current in each of the first quantity of constant current charging phases corresponds to one state of charge interval; and
selecting the charging currents in the plurality of constant current charging phases from the charging currents in the first quantity of constant current charging phases based on the state of charge of the battery module, wherein the charging currents in the plurality of constant current charging phases comprise a charging current in a constant current charging phase corresponding to a state of charge interval to which the state of charge belongs and a charging current in a constant current charging phase corresponding to a state of charge interval, wherein a value in this state of charge interval is greater than that in the state of charge interval of the state of charge, and a quantity of the charging currents in the plurality of constant current charging phases is less than or equal to the first quantity.

8. The method according to claim 7, wherein in charging currents in two adjacent constant current charging phases in the charging currents in the plurality of constant current charging phases, a value in a state of charge interval corresponding to a charging current in a previous-order constant current charging phase is less than a value in a state of charge interval corresponding to a charging current in a current-order constant current charging phase.

9. A charging apparatus, comprising a control module and a voltage and current conversion module, wherein the voltage and current conversion module is connected to a to-be-charged battery module, and the control module is connected to the voltage and current conversion module;
the voltage and current conversion module is configured to adjust, under control of the control module, a current for charging the battery module; and
the control module is configured to:
control the voltage and current conversion module to charge the to-be-charged battery module by using a charging current in a first constant current charging phase, wherein the charging current in the first constant current charging phase is one of charging currents in a plurality of constant current charging phases, the charging currents in the plurality of constant current charging phases are used to charge the battery module, the charging currents in the plurality of constant current charging phases are sequentially arranged, and the charging current in the first constant current charging phase is a charging current in a non-last-order constant current charging phase;
determine an expansion force of the battery module, wherein the expansion force is a force generated by extrusion between the battery module and a housing of the battery module due to expansion of the battery module in a process of charging the battery module; and
determine, based on the expansion force, whether to control the voltage and current conversion module to adjust a current for charging the battery module from the charging current in the first constant current charging phase to a charging current in a second constant current charging phase, wherein the charging current in the second constant current charging phase is a charging current in a next-order constant current charging phase of the charging current in the first constant current charging phase.

10. The apparatus according to claim 9, wherein the charging apparatus further comprises a battery module parameter collection module, and the battery module collection module is connected to the battery module, and is configured to collect a temperature of the battery module; and
when determining the expansion force of the battery module, the control module is specifically configured to:
search a correspondence between a temperature and the expansion force for an expansion force corresponding to a first temperature, wherein the first temperature is an internal temperature of the battery module in the process of charging the battery module by using the charging current in the first constant current charging phase.

11. The apparatus according to claim 9, wherein the charging apparatus further comprises a battery module parameter collection module, and the battery module collection module is connected to the battery module, and is configured to collect the expansion force of the battery module; and
when determining the expansion force of the battery module, the control module is specifically configured to:
obtain, by the control module, the expansion force that is of the battery module and that is collected by the battery module parameter collection module.

12. The apparatus according to any one of claims 9 to 11, wherein when determining, based on the expansion force, whether to adjust the current for charging the battery module from the charging current in the first constant current charging phase to the charging current in the second constant current charging phase, the control module is specifically configured to:
if the expansion force meets a preset condition corresponding to the first constant current charging phase, control the voltage and current conversion module to adjust the current for charging the battery module from the charging current in the first constant current charging phase to the charging current in the second constant current charging phase; or
if the expansion force does not meet a preset condition, control the voltage and current conversion module to keep charging the battery module by using the charging current in the first constant current charging phase.

13. The apparatus according to claim 12, wherein the preset condition is one of the following conditions:
the expansion force is greater than or equal to an expansion force parameter threshold in the first constant current charging phase, wherein the expansion force parameter threshold is a maximum value to which the expansion force increases in the first constant current charging phase;
a first change rate of the expansion force is greater than or equal to a first threshold in the first constant current charging phase, wherein the first change rate is a ratio of the expansion force to a state of charge of the battery module, and the first threshold is a maximum value to which the first change rate increases in the current constant current charging phase;
a first change rate is less than or equal to a second threshold in the first constant current charging phase, wherein the second threshold is a minimum value to which the first change rate decreases in the first constant current charging phase;
a first change rate is a first preset value, wherein the first preset value indicates a maximum value or a minimum value that is of the expansion force of the battery module in the first constant current charging phase and that is reached by the expansion force;
a second change rate of the expansion force is a second preset value, wherein the second change rate is a ratio of a first change rate to a state of charge of the battery module, and the second preset value indicates a maximum value or a minimum value that is of the first change rate of the expansion force in the first constant current charging phase and that is reached by the first change rate; or
the first constant current charging phase is a non-1^{st}-order constant current charging phase in the charging currents in the plurality of constant current charging phases, the expansion force is equal to a third preset value, the third preset value is determined based on a maximum value of the expansion force of the battery module and a preset proportion, the preset proportion is less than 1, and the maximum value of the expansion force is a maximum value of the expansion force of the battery in the process of charging the battery module and before the charging current in the first constant current charging phase is used to charge the battery module.

14. The apparatus according to any one of claims 10 to 13, wherein the charging current in the second constant current charging phase is a charging current in a last-order constant current charging phase in the charging currents in the plurality of constant current charging phases;
the battery module collection module is further configured to collect a charging voltage of the battery module;
the voltage and current conversion module is further configured to adjust, under control of the control module, the current for charging the battery module; and
the control module is further configured to:
after controlling the voltage and current conversion module to adjust the current for charging the battery module from the charging current in the first constant current charging phase to the charging current in the second constant current charging phase, control the voltage and current conversion module to keep charging the battery module by using a first voltage between a first moment when a charging voltage of the battery module reaches a voltage threshold and a second moment when the charging current of the battery module is less than a current threshold, wherein the voltage threshold is a voltage indicating to charge the battery module based on the first voltage, the first voltage is less than or equal to the voltage threshold, and the current threshold is a current indicating that charging ends.

15. The apparatus according to any one of claims 9 to 14, wherein the charging current in the first constant current charging phase is a charging current in a 2^{nd}-order constant current charging phase in the charging currents in the plurality of constant current charging phases; and
the control module is further configured to:
before controlling the voltage and current conversion module to charge the to-be-charged battery module by using the charging current in the first constant current charging phase, if an internal temperature of the battery module is less than a temperature threshold, control the voltage and current conversion module to charge the battery module by using a charging current in a 1^{st}-order constant current charging phase in the plurality of constant current charging phases until the internal temperature of the battery module reaches a preset temperature, wherein the preset temperature is greater than or equal to the temperature threshold, and the temperature threshold is a temperature indicating to adjust the current for charging the battery module from the charging current in the 1 ^{st}-order constant current charging phase to the charging current in the 2^{nd}-order constant current charging phase.

16. The apparatus according to any one of claims 9 to 15, wherein the control module is further configured to:
before controlling the voltage and current conversion module to charge the battery module by using the charging current in the first constant current charging phase, search a correspondence between the temperature and a charging parameter set for a first charging parameter set corresponding to the internal temperature of the battery module, wherein the first charging parameter set comprises charging currents in a first quantity of constant current charging phases, and a charging current in each of the first quantity of constant current charging phases corresponds to one state of charge interval; and
select the charging currents in the plurality of constant current charging phases from the charging currents in the first quantity of constant current charging phases based on the state of charge of the battery module, wherein the charging currents in the plurality of constant current charging phases comprise a charging current in a constant current charging phase corresponding to a state of charge interval to which the state of charge belongs and a charging current in a constant current charging phase corresponding to a state of charge interval, wherein a value in this state of charge interval is greater than that in the state of charge interval of the state of charge, and a quantity of the charging currents in the plurality of constant current charging phases is less than or equal to the first quantity.

17. The apparatus according to claim 16, wherein in charging currents in two adjacent constant current charging phases in the charging currents in the plurality of constant current charging phases, a value in a state of charge interval corresponding to a charging current in a previous-order constant current charging phase is less than a value in a state of charge interval corresponding to a charging current in a current-order constant current charging phase.

18. A computer-readable storage medium, storing computer instructions, wherein when the computer instructions are executed by a charging apparatus, the charging apparatus is enabled to perform the method according to any one of claims 1 to 8.
